# EUROPEAN PATENT APPLICATION

(11) **EP 0 936 794 A2**
(43) Date of publication of application: **18.08.1999**
(21) Application number: 99301041.2
(22) Date of filing: 12.02.1999
(51) Int. Cl.: H04M 1/72, H04Q 7/32, H04M 11/04

(54) **Radio communications device with emergency services**

(30) Priority: 13.02.1998 GB 9803146
(71) Applicant: NOKIA MOBILE PHONES LTD., 02150 Espoo (FI)
(72) Inventor: Brisse, Konrad, 45527 Hattingen (DE)
(74) Representative: Hibbert, Juliet Jane Grace

(57) **Abstract**

According to the present invention a radio communication device is described. The device is operated by means of a user interface and can be advantageously fixed in the car. The device is able to carry out emergency relevant services on activation and the user interface of the mobile telephone changes to an emergency mode on activation of the emergency relevant services.

The emergency mode of the user interface enables a simple and convenient way to handle the user interface during an emergency situation.

## Description

The present invention generally relates to a radio communication device, especially a mobile telephone. In particular, the present invention is concerned with the operation of the mobile telephone in an emergency situation.

During the past years mobile telephones have become commonly used throughout the world. Because mobile telephones can be operated throughout large portions of a country and they are carried about by the user, they may also be used for emergency calls by calling an emergency facility. This facility might be the police, the fire station or an emergency service centre that takes the appropriate actions upon receipt of a message from a mobile phone.

This message might be a voice call initiated by the user or an automatically triggered short message (SMS), if the user of the mobile phone is involved in a traffic accident and the mobile phone receives a signal, for example from the airbag of the vehicle, that apparently an accident happened.

Also for the case that the user of the mobile phone is in panic, e.g. a taxi driver who is threatened by a passenger, a panic button can be connected to a mobile phone in the vehicle. Upon depression of the panic button an automatic message will be dispatched and maybe also a phone call to a service center can be established.

If the vehide or the mobile phone is equipped with a positioning device, eg a GPS (Global Positioning System) receiver, which can give the actual position of the vehicle this information can be included into the transmitted short message.

Furthermore the emergency case might be a car breakdown and the driver wants to initiate a call to the service centre to call for assistance.

The activation of most of the above mentioned services takes some time but the operating time of mobile telephones is limited due to the fact that the mobile phones are powered by a battery. Furthermore the user of a mobile phone might be under stress in an emergency situation and under this conditions it can be possible that the user makes mistakes while operating the phone.

Therefore, it is an object of the present invention to perform emergency relevant services of a mobile phone in a simple and convenient way facilitating use of the emergency services.

According to the present invention the foregoing object may be attained by a radio communication device which is operated by means of a user interface. The radio communication device is responsive to a signal indicative of an emergency situation by changing the user interface to an emergency mode.

When the radio communication device changes to an emergency mode, the user is offered a simple and convenient way to operate the radio communication device in an emergency situation.

The radio communication device according to the invention may be a menu driven mobile telephone and characterised in that the user interface is reconfigured to a flat menu structure during the emergency mode. In the normal operation mode, the menu offers many diverse features/services. These features/services are not necessary, and even undesirable, in an emergency situation and therefore the menu of the user interface changes to an emergency menu which is flat and easy to operate. The user does not have to step through several menus to select an emergency service. He can access all emergency relevant services on the top layer of the menu.

According to another aspect of the invention only emergency relevant services can be operated by the menu when mobile phone has changed to the emergency mode of the user interface. This means that after activation of the emergency mode the ordinary user interface, which can be used during the normal operation mode for controlling the above mentioned services, like setting the loudness, ringing volume and other services which are not necessary in an emergency situation, is blocked.

According to another aspect of the invention the initiation of phone calls which are not important during an emergency situation is prohibited when the user interface has changed to the emergency mode. This can be done by blocking the numerical keypad of the telephone or the control unit of the telephone checks the dialled number before the call is initiated. If the dialled number is not an emergency number (112,999 or the number of an emergency service centre) the call will not be initiated and the user will be informed by a message.

The necessary phone numbers to contact a service centre in the case of an emergency are stored in the memory of the mobile phone. Therefore it is unnecessary that the user tries to set up any other call by dialling a phone number in an emergency case. Unnecessary calls would burden the battery of the mobile phone.

According to another aspect of the invention the keys 0,1 and 9 of the numerical keypad are not blocked in the emergency mode to enable the user to dial the numbers 112 (eg in Europe) or 999 (eg. in the United States of America) for calling emergency services directly without selecting them by the menu of the phone.

Security relevant services, like setting up a call to an emergency centre or sending a short message can not be cancelled by the user after the user interface has changed to the emergency mode and the service are started. This prevents that the service can be cancelled by mistake and has to be carried out a second time. This would lead to a longer time until the emergency centre is informed and would also burden the battery of the phone.

According to another aspect of the invention emergency relevant services can only be cancelled during a predefined time period after activation. This makes it possible to deactivate an emergency relevant services if the emergency mode was activated by mistake and gives the user the chance to stop this service during this predefined time period.

According to another aspect of the invention besides the numerical keypad also the power button is disabled when the user interface has changed to the emergency mode. This prevents the user from cancelling a service after it has been initiated.

There are several ways in which the emergency mode can be activated. One way to activate this mode can be the detection of a crash signal from a sensor which is mounted in or on the vehicle.

This crash signal can be the trigger signal of an airbag, which will be triggered after a sensor has detected an unusual high acceleration of the vehicle which will happen during an accident. Also roll-over sensors or other sensors might deliver a crash signal.

The emergency mode of the user interface can also be activated on depression of a panic button. The panic button can be one of the keys or a special key of the keypad of the used mobile phone or another key which is connected with the mobile phone and accommodated hidden or easy to find and easy to reach for the driver of the vehicle.

According to another aspect of the invention the emergency mode of the user interface is activated if the mobile phone switches to the security battery. The security battery can be integrated into the mobile phone and takes over the power supply of the phone, if a failure of the extemal power supply, eg the car battery, is detected.

According to other aspects of the invention a phone call is set up automatically to an emergency centre or a short message, containing eg. the location of the vehicle, the reason why the emergency mode was activated, the phone number of the calling phone, the name of the driver or anything else, will be send to the emergency centre.

A preferred embodiment of the invention will now be described by way of example only, with reference to the accompanying drawings in which:
Fig. 1 shows a block diagram of a mobile telephone according to the invention incorporating a handset and a phone unit
Fig. 2 shows a flow chart describing the condition when the user interface switches to the emergency mode
Fig. 3. shows a flow chart describing the user interface when it changes to the emergency mode in a panic situation
Fig. 4 shows a flow chart describing the user interface when it changes to the emergency mode after a crash
Fig. 5 shows a flow chart describing the user interface when it changes to the emergency mode after the security battery is activated
Fig. 6 shows a flow chart according to the invention
Fig. 7a-7d show the display and operation keys when the security battery is activated
Fig. 8a-8d show the display and operation keys in a crash situation
Fig. 9a-9d show the display and operation keys in a panic situation
Fig. 10 shows the menu structure of a mobile telephone in the normal operation mode
Fig. 11 shows the menu structure of a mobile telephone in the emergency mode "Security Battery active"

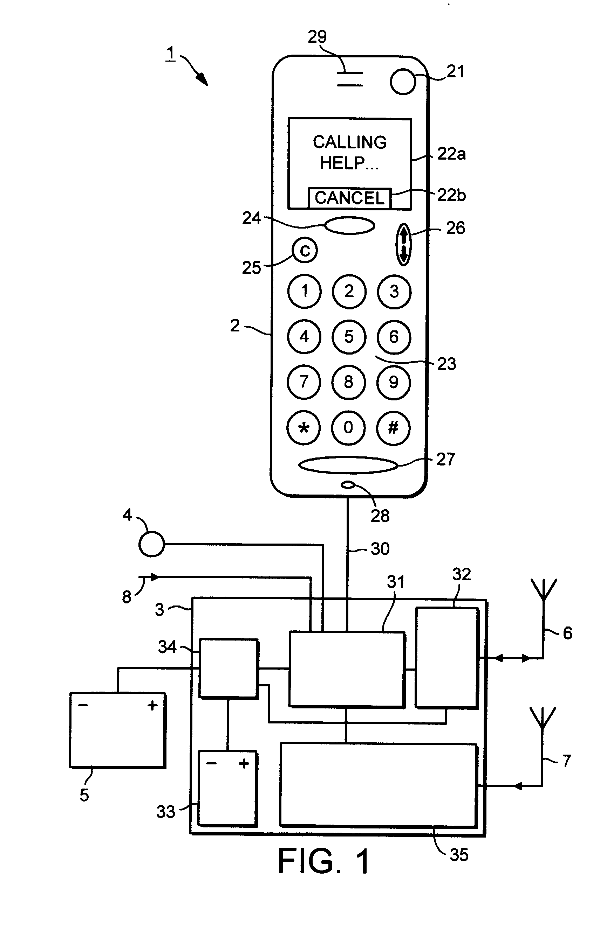

In Figure 1 a block diagram of a mobile phone 1 according to the invention is shown. The mobile phone is divided into two parts, a handset 2 and block 3 containing other blocks for operating the mobile phone, Block 3 is called the phone unit 3 in the following description.

The handset 1 might be positioned at the dashboard or between the front seats of a vehicle where it can be easily grasped by a driver or a passenger of the vehicle. The handset 1 is connected via the wire 30 with the phone unit 3. Wire 30 contains data lines for exchanging data between the handset and the phone unit and power supply lines for the handset.

The handset further comprises a microphone 28 and a loudspeaker 29, a display 22 with a main window 22a and a menu window 22b, a power key 21 for tuming on and off the mobile phone, a numerical keypad 23 with the keys 0 - 9 and a star (*)- and # - key, a clear key (C) 25. The display window 22a shows information for the user. Key 24, which is called softkey in the following description, can be pressed in order to trigger the function which is shown on the display menu window 22b, which changes during the operation of the mobile phone. As it is shown in Fig. 1 softkey 24 at this moment has the function to cancel the activity "Calling help" of the mobile phone. When softkey 24 is pressed at this stage a help call would be cancelled. Softkey 24 can also be used for the on- and off-hook function of the phone.

Also below the display 22 a selection key 26 with an arrow-up and arrow-down sign is placed on the right side of the mobile phone. The selection key can be used to scroll through the menu functions, shown on the display main window 22a and select different options. If for example a text message is displayed on the display main window 22a, but the display is not large enough to show the whole message, the user can use the selection key 26 to shift the text message up and down in order to read the whole message.

The handset 2 also contains a panic button 27, which the user can press in a panic situation or after an accident to call for help. The usage of the panic button will be described more detailed later.

The user-interface of the mobile phone is the combination of the numerical keypad 23, display 22, power-key 21 and the keys 24 -27. The user interface is used for setting up a call, sending a short message or control other functions of the phone like the loudness, ringing volume, key tones, call transfer functions and other.

The phone unit 3 contains a microprocessor 31 for controlling all functions of the mobile phone 1. Further a radio frequency unit 32 is connected to the microprocessor for transmitting and receiving data through antenna 6 to and from a base station of a cellular mobile telephone network like GSM (Global System for Mobile Communications).

The system is powered by the power management block 34, which is connected to the car battery 5 and the security battery 33. The power management block 34 connects the car battery 5 to the blocks of the mobile telephone under normal operating conditions. When the power from the car battery 5 fails power management block 34 automatically switches to the security battery 33 to enable at least the emergency services of the mobile phone when the car battery 5 can not power the system.

The phone unit 3 further contains a positioning block 35, for ascertaining the position of the vehicle. This block contains a receiver for GPS-signals (Global Positioning System) with an antenna 7 for ascertaining the absolute position. The positioning block 35 might also contain a gyroscope or acceleration sensors and can be connected to the speedometer and wheel sensors of the car to ascertain relative positions to a starting point (not shown in the figure).

Microprocessor 31 is also connected to an external panic button 4, which has a similar function than the panic button 27, but is located somewhere hidden in the vehicle, if the driver fears to be attacked by a passenger. The external panic button 4 can also be located in a position on the dashboard of the vehicle where it is easy to find and pressed easily in an emergency situation.

Also a connection line 8 from an airbag trigger, which is not shown, to the microprocessor 31 is provided which connects an airbag trigger to the microprocessor.

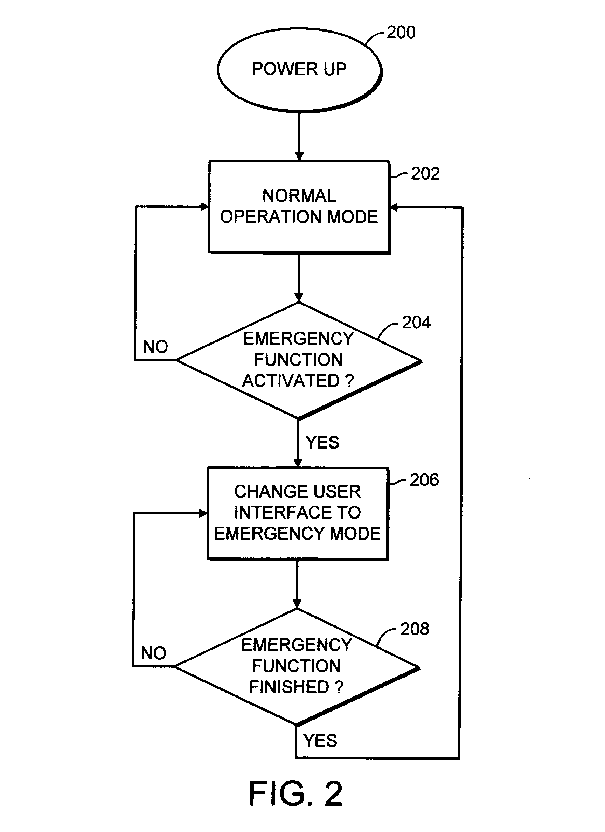

The flow charts in Fig. 2 shows the condition under which the user interface is switched to an emergency mode.

In step 200 the mobile telephone is powered up by pressing the power key 21. The user interface of the mobile telephone is know in the normal operation mode 202. This means the user can select any function of the menu, initiate and receive phone calls and anything else.

When the mobile phone detects that any emergency service is activated (eg crash, panic or security battery active) in step 204 the phone branches to step 206. If no emergency service is activated the phone retums to step 202.

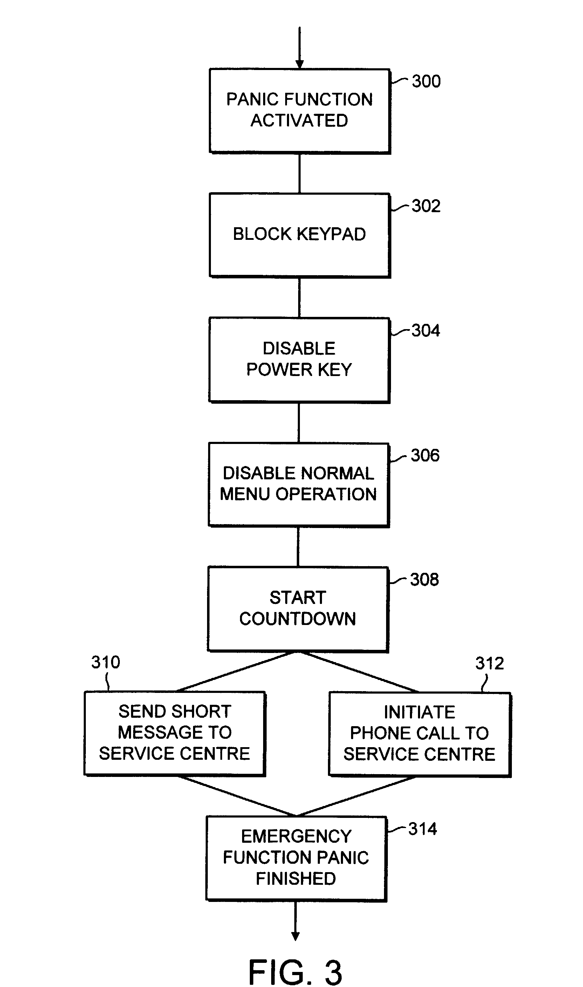

In step 206 the User-Interface changes to the emergency mode. The emergency mode of the user interface differs in accordance with the event which triggered this change which will be described more detailed in Fig. 3 - 6.

When the emergency services the mobile phone retums in step 208 to the normal operation mode. If the emergency services are not finished, eg a phone call to an emergency service centre is still active, the mobile phone retums to the emergency mode of the user interface, step 206.

The flow chart of Figure 3 describes individual steps of the summarising step 206 of Fig. 2 more detailed when the user interface changes to an emergency mode after the panic service is activated. The panic service can be activated by pressing the panic button 27 or the extemal panic button 4.

In step 302 the mobile phone immediately blocks the keypad or prohibits the initiation of a phone call to any telephone which is not relevant for this kind of emergency situation. When the keypad is blocked the keys 0,1,2 and 9 might still not be blocked to enable the initiation of an emergency call with the keypad.

In step 303 also the power key 21 will be blocked to prohibit to turn the mobile phone off while the emergency situation continuos.

The normal menu of the mobile phone is disabled in step 306 in order to avoid that the user tries to select services, actively or by mistake, which are not necessary in an emergency situation. In step 308 the mobile phone starts a countdown, which is accompanied by a display message and beep tones. The user has the possibility to stop the transmission of a short message and the initiation of the phone call to a service centre during step 308.

If the procedure was not stopped in step 308 the phone transmits a short message to a service centre in step 310 and initiates a phone call to a service centre at the same time in step 312.

When the emergency service is finished, eg the short message is dispatched and a phone call with the service centre was made the phone returns to the normal operation mode (step 202, Fig. 2)

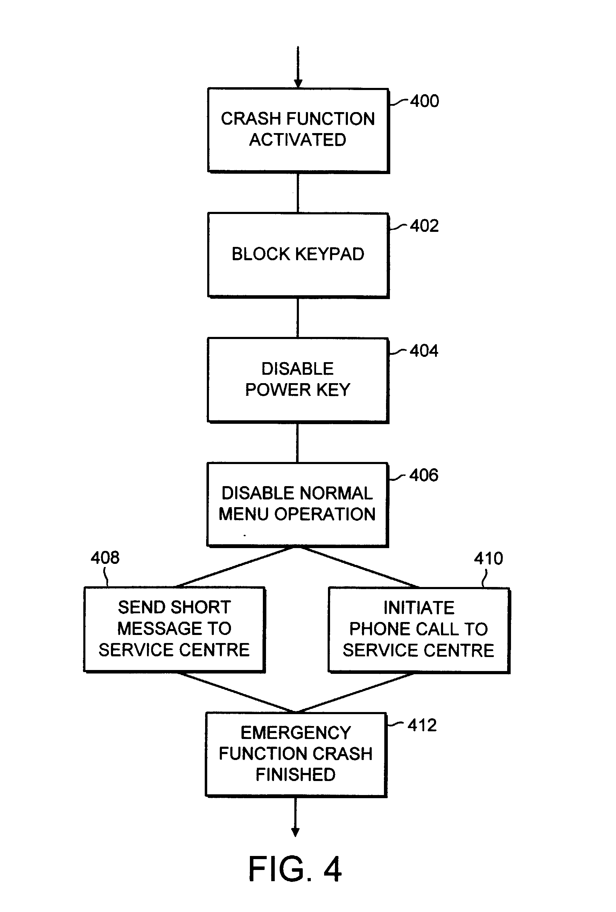

In Fig. 4 the emergency mode of the user interface is described when the crash service is activated, eg if a signal from the airbag trigger was received from the mobile phone via line 8 which indicates that an accident has happened.

The user interface of the phone changes also to the emergency mode as in Fig. 3 within steps 402, 404, 406. A step comparable to step 308 to give the user the possibility to stop the automatic transmission of a SMS or the initiation of the phone call, which takes place in steps 408 and 410, does not exist. The phone returns to the normal operation mode when the emergency service "crash" is finished.

Another kind of emergency situation appears, when the power management block of the mobile phone has noticed that the car battery 5 failed and the power management switches to the security battery 33. The security battery has only a limited capacity and therefore the user interface has to prohibit any unnecessary use of the phone.

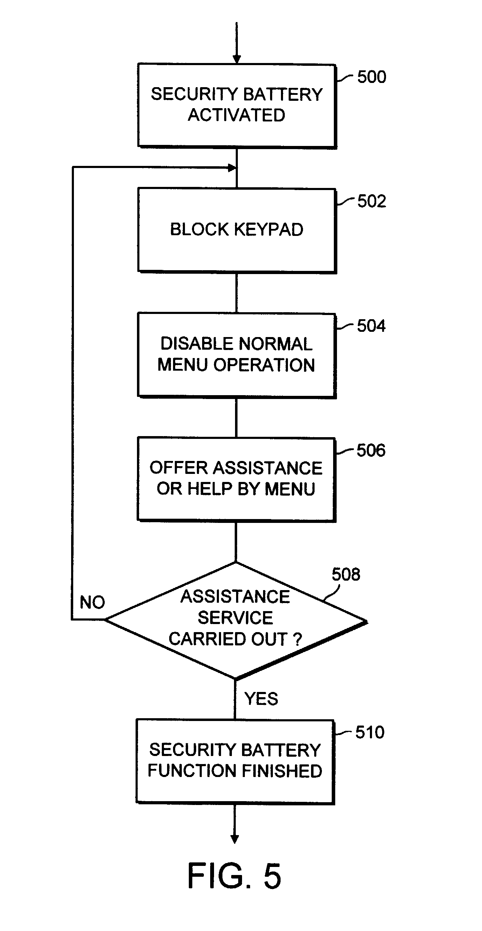

As it is shown in Fig. 5 the keypad of the mobile phone is blocked in step 502 after the security battery is activated in step 500 and the normal menu is disabled in step 504 to prohibit unnecessary calls.

The mobile phone offers to call for assistance or for help. The user can only choose on of these services. If he chooses assistance a call will be initiated to a service centre and in parallel a short message, also containing the location of the mobile phone, is dispatched. The service centre can know inform the user of the phone where he can find the next garage to locate the problem with the car battery.

When the user does not choose one of these services the mobile phone automatically turns off after a predefined time interval. When the phone is powered up again the phone proceeds with step 502 until the security battery is not active, i.e. the car battery has taken over the power supply for the phone again.

Therefore the phone checks in step 508 if the assistance service is carried out. When this is done the security battery service is finished and the phone returns to the normal operation mode 202, Fig. 2.

It has to be noted that the security battery will be activated in a panic or, even more likely in a crash situation, when the car battery is disconnected from the mobile phone. Therefore the priority of the emergency mode of the user interface activated by crash or panic is higher then the priority of the emergency mode activated by the security battery active signal.

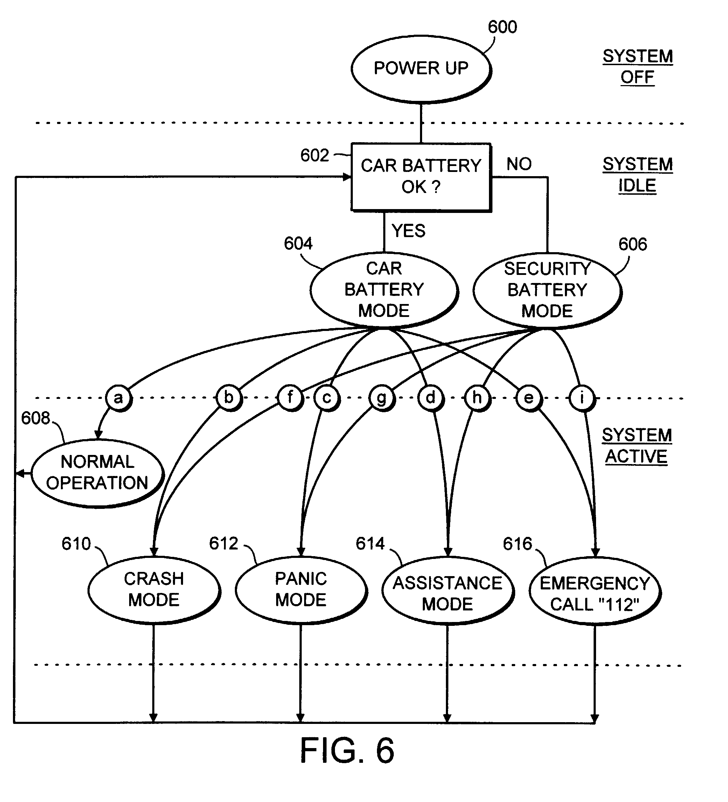

This might be better understood by the flowchart of Fig. 6 which shows the different emergency modes of the user interface of the mobile phone and how they are entered.

The chart starts with step 600. Under normal conditions the mobile phone 1 will be powered up by pressing the power key 21 of handset 2. On the right side of the chart it can be seen that the mobile phone 1 changes from "System off" to "System Idle". The three states "System off", "System idle" and "System active" are separated by the dashed lines in the flowchart.

When the mobile phone 1 enters the "System Idle" state microprocessor 31 sends a request to the power management block 34 if the power supply trough the car battery 5 is working. If this is the case the system enters the Car battery mode 604. Usually the mobile phones, eg in the GSM system (Global System for Mobile communications) show the name of the network or service provider the phone is connected with at this stage.

From mode 604 the mobile phone can enter the normal operation mode 608 which provides the whole normal functionality of the user-interface. If the user wants to set up a call, read or send short messages or change any phone settings like ringing volume, display and keypad lights, key tones and so on the system goes via path (a) to the "system active" status into the Normal Operation mode 608. When the user has finished this activities the system returns to the "System Idle" state.

The system also enters the normal operation mode 604 if a call or a message from the network is received.

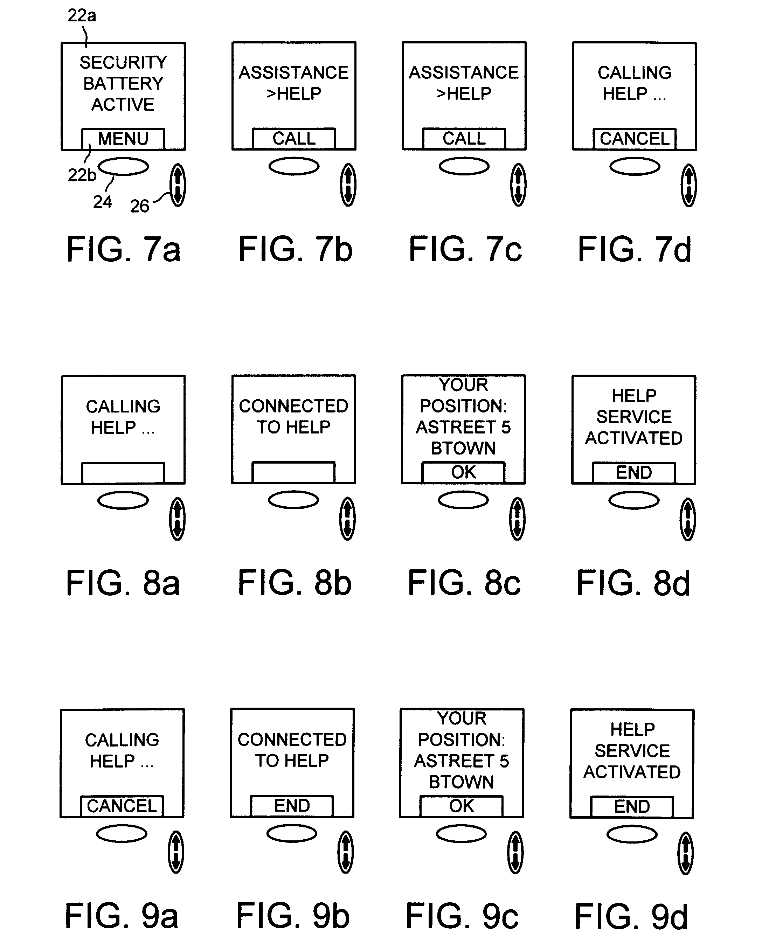

If in step 602 the microprocessor 31 finds out that the system is not powered by the car battery 5 because the power management block 34 has switched to the security battery 33, then the system enters the first emergency mode, the security battery mode 606. As it is shown in Fig. 7a the mobile phone automatically displays the message "Security Battery active" on main display window 22a.

The user can only enter the "Security battery active" menu by pressing softkey 24 now. The ordinary menu, which can be used during normal operation of the phone, can not be used in this situation. When the user has entered the "security battery active" menu, as shown in Fig. 7b, he can make the choice between an assistance call and a help call. He chooses by pressing selection key 26 up or down (Fig. 7b and Fig. 7d) and initiates the call by pressing softkey 24. Fig. 7d shows the state when the phone starts to establish a call for help. The user can cancel this call by pressing softkey 24 now.

While the mobile phone is in the emergency mode "security battery active" the phone turns off after a predefined time interval automatically to save power. During the "security battery active" status the user can still make emergency calls by dialling eg 112 or 999 or pressing the panic button 27. If the user tries to establish another call than an assistance, panic, crash or an emergency call, the phone will show the error note "Emergency calls only".

When the mobile phone is in the "System Idle" status (Fig. 6) it will enter the emergency modes "crash mode" (610), "panic mode" (612), assistance mode (614) or emergency call mode (616) on different paths (b-i) which are described in detail in the following sections.

When the mobile phone is in the "Car battery mode" 604 and receives a signal from the airbag trigger through line 8 that informs that a car crash has happened the system goes into the crash mode 610 via path (b).

The "panic mode" 612 is entered from the car battery mode 604 via path (c) on depression of the panic button 27 or the external panic button 4.

The "assistance mode" 614 is entered via path (d) from the car battery mode 604 if the user has selected an assistance call in the normal operation menu.

After dialling any emergency call number (112 or 999) the system goes from the car battery mode 604 to the "emergency call mode" 616.

The paths (f,g,h,i) in Figure 6 define the way from the "Security Battery Mode" to the modes 610, 612, 614, 616.

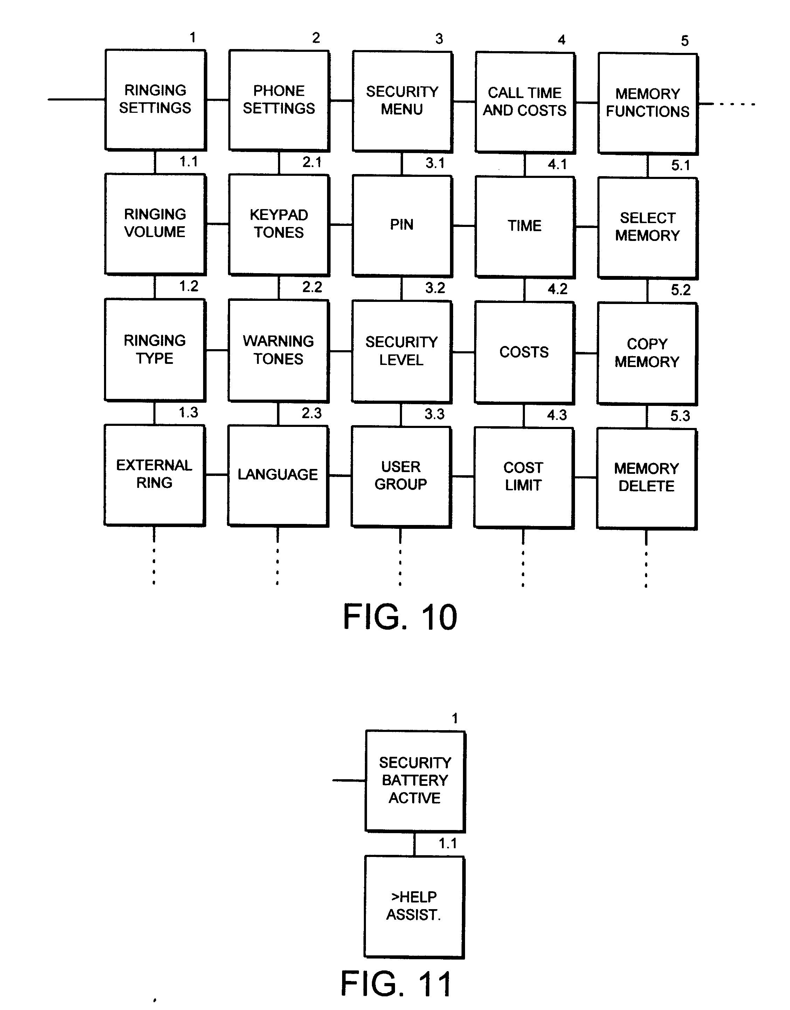

When the telephone is in the "Security battery mode" 606 or has entered one of the modes 610, 612, 614 or 616 via paths f,g,h or i the operation time of the mobile telephone is limited and therefore it is important that the menu structure is as flat as possible to avoid unnecessary or false operations of the phone in this kind of situation. The menu structure when the phone is in the "Security Battery mode" 606 is shown in Fig. 11.

Similar to path (b) the system enters the crash mode via path (f) on detection of a crash signal.

The system enters the panic mode 612 via path (g) on depression of the panic button 27 or the external panic button 4. The assistance mode 614 is entered via path (h) when an assistance call is selected by the menu and the "emergency call mode" 616 is entered via path i after dialling an emergency number (112 or 999).

The paths (a-i) for leaving the system Idle mode and entering the system active mode can be summarized as follows:
a - usual operation requested by user (e.g. phone call)
b - car crash detected (airbag triggered)
c - external panic button 4 or panic button 27 depressed
d - assistance call selected by menu selection
e - emergency call requested by dialing an emergency number
f - car crash detected (airbag triggered)
g - panic button 27 or external panic button 4 depressed, panic mode activated by menu selection
h - assistance call activated by menu selection
i - emergency call requested by dialing "112" or "999"

The crash mode 610, panic mode 612 are described more detailed in the following paragraphs with reference to the figures 8 and 9.

When the system has entered the crash mode the automatic transmission of a short message will be initiated. The display main window 22a shows the message "Calling help ..."(Fig. 8a). When the voice call is successfully established and the short message was received by the service centre the message "Connected to help is shown", Fig. 8b. The user can speak with the service centre if possible. Furthermore the service centre returns a message to the mobile phone with the determined position of the phone/the vehicle as shown in Fig. 8c. The user can acknowledge receipt of this message now by pressing softkey 24 (OK) and the system shows the message "help service activated", Fig. 8d. The crash mode can now be left by pressing the softkey 24 (END) and the phone returns to the idle mode.

After depression of the panic button 27 or the external panic button 4 the system enters the panic mode 612. Like in the crash mode 610 the mobile phone now automatically initiates a short message to a service centre and establishes a voice call. To avoid the activation of this service, maybe if the panic button 27 or the external panic button 4 were depressed by mistake, the menu window 22b displays the message "Cancel" and the user can stop the service by depressing the softkey 24 (Fig. 9a). If the user does not choose to cancel the service the same procedure, shown in Fig. 9b, 9c and 9d starts as it is shown in Fig. 8 a to d after a predefined time.

Before the system enters the panic mode also a countdown can be started and the activation of the panic service can be cancelled until the countdown reaches zero.

Fig 10 shows the menu structure of a mobile telephone during the normal operation. With the top layer of the menu (1-5) the user can choose the areas where he might change or control something. If for example the user wants to change the keypad tones he opens the menu with the softkey 24 which enables to enter the menu during normal operation. By using the arrow key 26 he can choose now menu 2 "Phone settings" and presses softkey 24 again to enter the menu. By using the arrow key 26 again he goes deeper into menu 2 until he has reached the menu 2.1 "Keypad tones". The user can now turn the keypad tone on or off when he goes deeper into the menu.

The aforementioned example is presented to show that the user can make a lot of selections in the menu in the normal operation mode. This deep and complicated menu structure is unnecessary during an emergency situation and Fig. 11 shows a menu structure which is simple and flat after the user interface has changed to the emergency mode. The menu in Fig. 11 only offers the possibility to enter the "Security Battery Active" menu (level 1) when it is indicated that the phone is powered by the security battery now. The user can only select this menu and choose between a help- and an assistance call in menu level 1.1.

The present invention may include any novel feature or combination of features disclosed herein either explicitly or implicitly or any generalisation thereof irrespective of whether or not it relates to the presently claimed invention or mitigates any or all of the problems addressed. In view of the foregoing description it will be evident to a person skilled in the art that various modifications may be made within the scope of invention.

## Claims

1. A radio communication device which is operated by means of a user interface characterised in that the device is responsive to a signal indicative of an emergency situation by changing the user interface to an emergency mode.

2. A radio communication device according to claim 1 characterised in that the user interface changes to the emergency mode on detection of a crash signal.

3. A radio communication device according to claim 1 characterised in that said user interface changes to the emergency mode on selection of a panic function.

4. A radio communication device according to claim 1 or 3 characterised in that said user interface changes to said emergency mode on depression of a panic button.

5. A radio communication device according to claim 1 characterised in that said user interface changes to the emergency mode on activation of the security battery.

6. A radio communication device according to any of the preceding claims characterised in that the user interface is reconfigured to a flat menu structure during the emergency mode.

7. A radio communication device according to any of the preceding claims characterised in that only emergency relevant services can be selected by the menu when the user interface has changed to said emergency mode.

8. A radio communication device according to any of the preceding claims characterised in that the number block of the telephone is disabled during said emergency mode.

9. A radio communication device according to claim 8 characterised in that the keys 1,0 and 9 of said number block are enabled to enable emergency calls.

10. A radio communication device according to any of the preceding claims characterised in that emergency relevant services can not be cancelled by the user.

11. A radio communication device according to any of the preceding claims characterised in that emergency relevant services can only be cancelled for a predefined time period after activation.

12. A radio communication device according to any of the preceding claims characterised in that the power button is disabled when the user interface has changed to the emergency mode.

13. A radio communication device according to claim 2 characterised in that the crash signal is an airbag trigger signal.

14. A radio communication device according to claims 2 or 3 characterised in that an emergency message is sent to a service centre automatically.

15. A radio communication device according to claim 2 or 3 characterised in that a phone call to a service centre is initiated automatically.

16. A method for operating a radio communication device with a user interface which offers emergency relevant services characterised in that the user interface changes to an emergency mode responsive to a signal indicative of an emergency situation.
